# EUROPEAN PATENT APPLICATION

(11) **EP 1 850 499 A1**
(43) Date of publication of application: **31.10.2007**
(21) Application number: 06113156.1
(22) Date of filing: 26.04.2006
(51) Int. Cl.: H04B 3/23

(54) **Echo compensation for wireless access**

(71) Applicant: Koninklijke Philips Electronics N.V., 5621 BA Eindhoven (NL); Philips Intellectual Property & Standards GmbH, 20099 Hamburg (DE)
(72) Inventor: The designation of the inventor has not yet been filed
(74) Representative: van der Veer, Johannis Leendert

(57) **Abstract**

The present invention relates to an access device (20), method of side-tone suppression for a wireless connection, and a computer program product, wherein an echo cancellation function (200) is used to cancel a side-tone echo generated at a line interface (21) to the fixed network, and wherein the echo cancellation function is controlled (220) to allow adaptation of the echo cancellation function only during a training phase of the wireless connection. Thereby, undesirable side-tone effects at the line interface can be suppressed, while the echo cancellation coefficients remain fixed during the data exchange session.

## Description

The present invention relates to a device for providing wireless access to a fixed network, a method of side-tone suppression for a wireless connection to the fixed network, and a computer program product for generating the side-tone suppression steps when run on a computer device.

Speech quality is an important factor for telephone systems. Continuous improvements of telephone systems in this regard are thus vital. An echo, which is a delayed version of what was originally transmitted, is regarded as a severe distraction to the speaker if the delay is long. For long-distance communications, a remotely generated echo signal often has a substantial delay. Moreover, speech and channel coding compulsory in digital radio communications systems and for telephone calls routed over the Internet also result in significant delays which makes the echoes generated a relatively short distance away clearly audible to the speaker. Hence, cancellation of echoes is essential in order to maintain speech quality.

There are different types of echoes that occur in a telephone system. One type is network echo that origins from impedance mismatch in hybrid circuits employed fixed networks, such as the public switched telephone network (PSTN). Hybrids are used in order to connect between a two-wire link and a four-wire link in the fixed network. Since it is practically impossible to tune the hybrids in a perfect manner, impedance mismatch will result in that some of the incoming speech is reflected back to the talker as a delayed and distorted version of the original speech.

If an analog modem is placed in a portable part or mobile station and a connection to the fixed network line is based on a wireless link with audio compression, e.g., DECT with ADPCM (Adaptive Differential Pulse Code Modulation), the performance of the modem will be reduced due to a loop-back of the modem transmit signal in the fixed part of the overall wireless analog modem consisting of the portable part and the fixed part which is connected to the fixed network. This is especially the case for long lines where the receiving (RX) signal is weak and has a low power level. This leads to a reduction of the signal-to-noise ratio (SNR) due to the side-tone, generated by a reflection at a line interface to the fixed network, and the compression function. Due to the reduced SNR, the wireless modem connection either cannot be established at all or only at a lower data rate.

It is therefore an object of the present invention to provide improved performance for wireless access to a fixed network.

This object is achieved by an access device as claimed in claim 1, a side-tone suppression method as claimed in claim 7, and a computer program product as claimed in claim 11.

Accordingly, echo cancellation is used to suppress side-tone effects in a wireless access device. The coefficients of the echo cancellation function are set during the training phase of the wireless connection, so that the echo cancellation function can be kept linear during the data exchange phase or connection period.

The cancellation controlling may be adapted to use coefficients of the last call before the start of the adaptation, and use new coefficients, obtained by said adaptation, after the end of the adaptation. Thereby, the cancellation coefficients are frozen during data transmission after the training phase, so that linear behavior of echo cancellation can be ensured. As an example, the cancellation control means may be adapted to allow the adaptation only during a predetermined time period within the training phase. This predetermined period can be selected so as to make sure that the new cancellation coefficients are available when data exchange starts.

Furthermore, the cancellation control means may be adapted to store coefficients obtained during the adaptation for use in the next call. The storing of the new coefficients ensures that they are available at the start of the connection relating to the next call.

Additionally, the cancellation control means or function may be controlled by control signals received via the wireless connection. Thereby, the portable part of the wireless modem apparatus can control the echo cancellation function provided at the fixed part of the wireless modem apparatus, so that the adaptation is performed within the training phase.

The above method steps can be performed by concrete hardware functions or by a control program or routine for controlling a computer device to generate the respective method steps.

The present invention will now be described in greater detail based on a preferred embodiment with reference to the accompanying drawings in which:
Fig. 1 shows a schematic block diagram of a portable part of a wireless modem according to the preferred embodiment;
Fig. 2 shows a schematic block diagram of a fixed part of a wireless modem according to the preferred embodiment;
Fig. 3 shows a schematic frequency diagram indicating spectral lines and noise floors of signals in the wireless modem without echo cancellation;
Fig. 4 shows a schematic frequency diagram indicating spectral lines and noise floors of signals in the wireless modem with echo cancellation according to the preferred embodiment; and
Fig. 5 shows a time diagram indicating connection phases and echo cancellation control statuses according to the preferred embodiment.

The preferred embodiment will now be described based on a wireless analog modem for providing access to the PSTN based on a wireless link with audio compression, e.g., DECT with ADPCM 32 kbit/s.

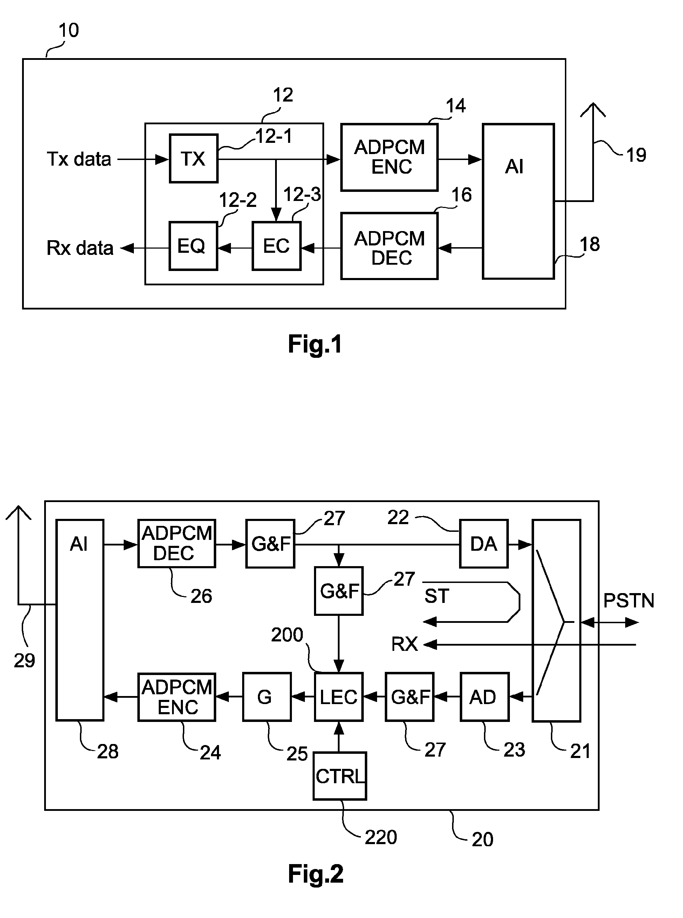

Fig. 1 shows a schematic block diagram of the portable part of the wireless analog modem. The portable part, which corresponds to a mobile station, receives transmission (TX) data and supplies it to a modem 12 with a transmission function 12-1 for modulating the TX data and supplying the modulated data to an audio compression encoder 14 which performs ADPCM encoding. The encoded TX signal is supplied to an air interface 18, which may comprise a power amplifier and other circuits required for transmitting the encoded TX signal via an antenna 19 to a fixed part 20 (shown in Fig. 2). Signals received via the antenna 19 and the air interface 18 are supplied to an audio expansion function achieved by an ADPCM decoder 16 which decodes the received signal and supplies it to an echo cancellation function 12-3 of the modem 12. The conventional echo cancellation performed at the echo cancellation function 12-3 is based on a reference signal branched-off from the transmission branch at the output of the TX function 12-1. The corrected receiving signal is supplied to an equalizer function 12-2 for correcting frequency response and/or level of the corrected receiving signal, so as to obtain receiving (RX) data.

Fig. 2 shows a schematic block diagram of the fixed part 20 of the wireless analog modem, wherein the TX signal transmitted by the air interface 18 of the portable part 10 is received via an antenna 29 and an air interface 28 provided at the fixed part. The compressed TX signal is expanded at an ADPCM decoder 26 and supplied to a processing stage 27 adapted to provide a required gain and filtering function before the TX signal is digital-to-analog (DA) converted in a respective DA converter 22. The analog TX signal is then supplied to a line interface 21 with a direction coupling function adapted to couple the analog TX signal received from the DA converter 22 to the PSTN line and to couple receiving (RX) signals received from the PSTN line to an analog-to-digital (AD) converter 23 for converting the analog RX signals into digital RX signals which are supplied to a processing stage 27 for introducing required gain and filter operations. The digital filtered and amplified RX signals of the fixed part 20 are then supplied to a line echo cancellation function or unit 200 which performs echo cancellation based on a reference signal portion branched-off from the upper branch of the fixed part 20, which corresponds to a TX path of the whole analog wireless modem. The reference signal portion branched-off from the upper branch is processed in a processing stage 27 to apply required gain and filtering operations to the branched-off reference signal portion.

The line echo cancellation unit 200 may include a linear filtering part which may essentially be an adaptive filter that tries to adapt to the echo path. In this way a replica of the echo can be produced that can be removed from the signal orienting from the line interface 21 where the echo source is located, thereby canceling the echo. The filter generating the echo replica based on a branch-off signal is a digital filter which may have a finite or infinite impulse response. As an example, an adaptive, linear finite impulse response filter (FIR) with a number of delay lines and a corresponding number of coefficients, or filter delay taps may be provided. The coefficients are values, which when multiplied with delayed versions of the filter input signal, i.e., the branched-off signal, generate an estimate of the echo. The filter is adapted, i.e. updated, so that the coefficients converge to optimum values. A way to cancel out the echo may be to update the digital filter using a normalized least mean square (NLMS) algorithm or a variety of alternative algorithms.

Thus, during echo cancellation it is desired that the line echo cancellation unit 200 estimates the pure delay of the entire impulse response of the echo path in such a way that the filter coefficients are adapted to the part of the entire echo that originates from the actual echo source. This procedure may be described as a time alignment of the filter to the echo source. In this way, the number of coefficients of the filter can be kept to a reasonable and practicable level.

Consequently, the line echo cancellation unit 200 serves to remove or suppress an echo or a side tone ST reflected back at the line interface 21, as indicated by the corresponding arrow in Fig. 2. The output signal of the line echo cancellation unit 200 is amplified at a gain circuit 25 and supplied to an audio compression function achieved by an ADPCM encoder 24, before being radio-transmitted to the portable unit 10 via the air interface 28 and the antenna 29.

According to the preferred embodiment, a cancellation control function or unit 220 is provided for controlling operation of the line echo cancellation unit 200. The line echo cancellation unit 200 is provided to suppress the side-tone signal ST in the fixed part 20 to avoid loss in a signal-to-noise ratio on the compression.

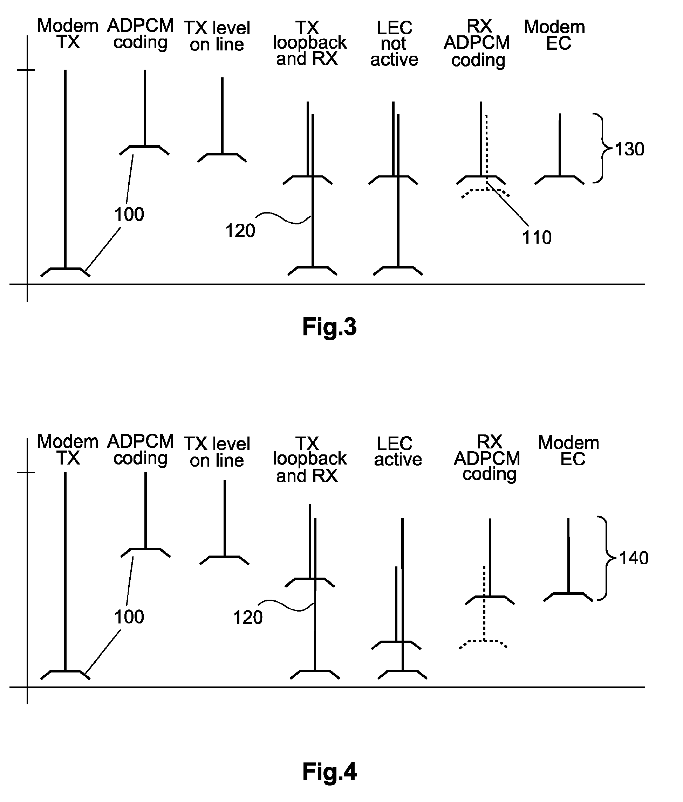

This detrimental effect is shown in Fig. 3.

Fig. 3 shows a schematic frequency diagram indicating spectral lines and noise floors 100 at different components of the portable part 10 and fixed part 20. The highest signal-to-noise ratio (SNR) is provided at the output of the modem 12 (leftmost spectral line). The audio compression at the ADPCM encoder 14 applies audio compression so that the noise floor 100 is shifted to a higher level, as indicated by the second spectral line from the left side of the frequency diagram of Fig. 3. The third spectral line indicates the level of the signal as supplied by the line interface 21 of the fixed part 20 to the PSTN line. The pair of spectral lines at the fourth position indicate the dampened or suppressed loop-back or side-tone signal ST and the RX signal received from the PSTN line at the output of the AD converter 23 and indicated by a straight arrow in Fig. 2. If the line echo cancellation unit 200 is not active, the relation of the looped back side-tone signal ST and the RX signal 120 stays the same at the output of the line echo cancellation unit 200, as indicated by the pair of spectral lines at the fifth position in Fig. 3.

After the ADPCM encoder 24 has applied its audio compression, the noise floor of the compressed RX signal is still lower than the noise floor of the looped back side-tone signal ST. This is indicated by the pair of spectral lines at the sixth position in Fig. 3. Consequently, the dotted part of the compressed RX signal is suppressed by the noise level of the looped back side-tone signal ST, so that a portion 110 of the SNR is lost due to the loop-back problem at the line interface 21. After echo cancellation at the echo cancellation function 12-3 of the modem 12 of the portable part 10, a reduced SNR 130 is observed.

In contrast thereto, Fig. 4 shows the spectral situation with active line echo cancellation unit 200 in the fixed part 20. The first four spectral lines correspond to Fig. 3, as the line echo cancellation function 200 has no impact on these lines. However, due to the active line echo cancellation unit 200, the looped-back side-tone signal ST will be suppressed and appears at a lower level at the fifth position of the frequency diagram of Fig. 4. Thus, the noise floor of the loop-back side-tone signal ST no longer influences the noise floor of the compressed RX signal, as indicated by the pair of spectral lines at the sixth position from the left of Fig. 4. Consequently, the full SNR level 140 is obtained after the echo cancellation function 12-3 of the modem 12 of the portable part 10.

However, the line echo cancellation unit 200 has to be linear during the entire connection period of data transfer, which can be achieved by the cancellation control unit 220. This cancellation control unit 220 controls the line echo cancellation unit 200 to allow adaptation (i.e. non-linear behavior) only during the training phase at the beginning of the connection and freezes the line echo cancellation unit 200 afterwards. This means that linear behavior is achieved but with suppression of the side-tone signal ST until the connection has been released.

The cancellation control unit 220 may be implemented as a separate processor function or a subroutine of a general processor controlling the fixed part 20. Moreover, both line echo cancellation unit 200 and cancellation control unit 220 may be implemented as software routines used for controlling a processor unit provided at the fixed part 20.

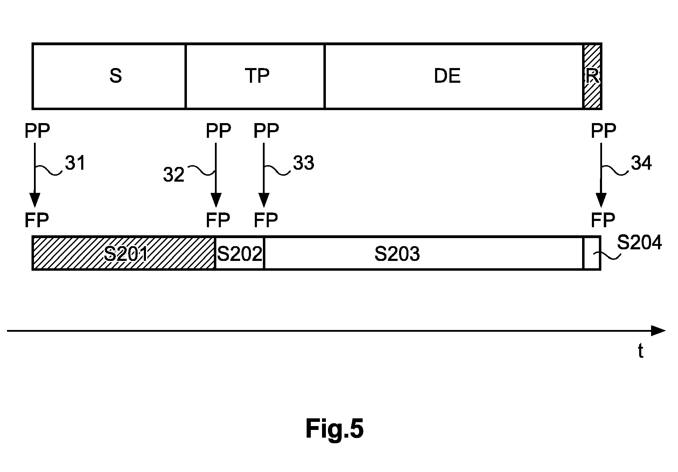

Fig. 5 shows a schematic time diagram indicating connection phases and control statuses of the line echo cancellation unit 200. The upper bars indicate the connection phases of the overall wireless analog modem, while the lower bars indicate the control statuses. The first connection phase is a start phase S where the line is taken, dialing is performed and a modem connection is started. The second phase is the training phase TP where a training sequence is transmitted from the portable part 10 to the fixed part 20 in order to perform channel adaptation. The third phase is a data exchange phase DE where actual data is exchanged via the wireless connection. The final fourth phase is a release phase R where the connection and line are released. It is noted that a training sequence may as well be transmitted from the fixed part 20 to the portable part 10. However, here, the training phase TP is intended to cover only the transmission of the training sequence from the portable part 10 to the fixed part 20.

Based on a control signaling transmitted from the portable part (PP) 10 to the fixed part (FP) 20, a corresponding control status is applied to the line echo cancellation unit 200 by the cancellation control unit 220 which receives the control signals. In particular, at the beginning of the start phase S, a first signal 31 is supplied to the fixed part 20 and a first control status S201 is set by the cancellation control unit 220 so as to control the line echo cancellation unit 200 to use coefficients from the last call for its digital echo cancellation filter. Then, after start of the training phase TP, the portable part 10 issues a second control signal 32 which indicates start of adaptation and controls the cancellation control unit 220 to start the second control status S202 where the coefficients of the line echo cancellation unit 200 are adapted to the prevailing new conditions. Before or at least at the end of the training phase, the portable part 10 issues a third control signal 33 to freeze coefficients, so that the cancellation control unit 220 controls the line echo cancellation unit 200 to use the actual new coefficients without any further adaptation during the initiated third control status S203. Thereby, a linear behavior of the line echo cancellation unit 200 is achieved during the data exchange phase DE. During the release phase R, the fixed part 20 stores the obtained and frozen new coefficients for the next call in a fourth control status S204. Finally, the portable part 10 issues a fourth control signal 34 for signaling the end of the connection to the fixed part 20.

It is noted that the control signals 31 to 34 may be signaled in-band or out-of band, or may even be dispensed with, if the fixed part 20 obtains the timing information directly from other signaling exchanged via the wireless connection.

It is further noted that the present invention is not restricted to the above preferred embodiment and can be used in any access device for providing wireless access to a fixed network, as long as a training phase or the like is provided.

In summary, the present invention relates to an access device, method of side-tone suppression for a wireless connection, and a computer program product, wherein an echo cancellation function is used to cancel a side-tone echo generated at a line interface to the fixed network, and wherein the echo cancellation function is controlled to allow adaptation of the echo cancellation function only during a training phase of the wireless connection. Thereby, undesirable side-tone effects at the line interface can be suppressed, while the echo cancellation coefficients remain fixed during the data exchange session.

Finally but yet importantly, it is noted that the term "comprises" or "comprising" when used in the specification including the claims is intended to specify the presence of stated features, means, steps or components, but does not exclude the presence or addition of one or more other features, means, steps, components or group thereof. Further, the word "a" or "an" preceding an element in a claim does not exclude the presence of a plurality of such elements. Moreover, any reference sign does not limit the scope of the claims.

## Claims

1. An access device for providing wireless access to a fixed network, said device (20) comprising:
a) air interface means (28) for receiving a signal via a wireless connection;
b) line interface means (21) for providing a line connection to said fixed network;
c) echo cancellation means (200) for canceling a side-tone echo generated at said line interface means (21); and
d) cancellation control means (220) for controlling operation of said echo cancellation means (200) to allow adaptation (S202) of said echo cancellation means (220) only during a training phase of said wireless connection.

2. The device according to claim 1, wherein said cancellation control means (220) is adapted to control said echo cancellation means (200) to use coefficients of the last call before the start of said adaptation (S202), and to use new coefficients, obtained by said adaptation, after the end of said adaptation (S202).

3. A device according to claim 1 or 2, wherein said cancellation control means (220) is adapted to allow said adaptation (S202) only during a predetermined time period within said training phase.

4. A device according to any one of the preceding claims, wherein said cancellation control means (220) is adapted to store coefficients obtained during said adaptation (S202) for use in the next call.

5. A device according to any one of the preceding claims, wherein said cancellation control means (220) are controlled by control signals (32, 33) received via said wireless connection.

6. A device according to any one of the preceding claims, wherein said device comprises a fixed part (20) of a wireless modem (10, 20).

7. A method of side-tone suppression for a wireless connection to a fixed network, said method comprising:
a) providing an echo cancellation function (200) at an access device (20) of said wireless connection;
b) using said echo cancellation function (200) to cancel a side-tone echo generated at a line interface (21) to said fixed network; and
c) controlling said echo cancellation function (200) to allow adaptation (S202) of said echo cancellation function (200) only during a training phase of said wireless connection.

8. A method according to claim 7, wherein said controlling step comprises using cancellation coefficients of the last call before the start of said adaptation (S202), and using new cancellation coefficients obtained by said adaptation after the end of said adaptation (S202).

9. A method according to claim 8, wherein said controlling step comprises freezing said new cancellation coefficients during data exchange via said wireless connection.

10. A method according to any one of claims 7 to 9, further comprising the step of performing said controlling step in response to control signals (32, 33) received via said wireless connection.

11. A computer program product comprising code means for generating the steps of method claim 7 when run on a computer device.
